# EUROPEAN PATENT APPLICATION

(11) **EP 3 675 408 A1**
(43) Date of publication of application: **01.07.2020**
(21) Application number: 19168541.1
(22) Date of filing: 16.07.2015
(51) Int. Cl.: H04L 5/00, H04W 72/04, H04L 1/22, H04L 27/26

(54) **TERMINAL-TO-TERMINAL DATA TRANSMISSION METHOD AND DEVICE**

(62) Divisional of application: 15898032.6
(71) Applicant: Huawei Technologies Co., Ltd., Shenzhen, Guangdong 518129 (CN)
(72) Inventor: ZHAO, Zhenshan, Shenzhen, Guangdong 518129 (CN)
(74) Representative: Pfenning, Meinig & Partner mbB

(57) **Abstract**

Embodiments of the present invention provide a terminal-to-terminal data transmission method and a device. The terminal-to-terminal data transmission method includes: determining, by a terminal, a frame structure of a subframe used for communication; and implementing, by the terminal, communication with another terminal by using the subframe; where a minimum quantity of orthogonal frequency division multiplexing OFDM symbols used for transmitting demodulation reference signals DMRSs in the subframe is 3, and the OFDM symbols used for transmitting the DMRSs are distributed at intervals in the subframe. The embodiments of the present invention are used to improve reliability of data transmission in D2D communication when a channel changes quickly.

## Description

### TECHNICAL FIELD

Embodiments of the present invention relate to communications technologies, and in particular, to a terminal-to-terminal data transmission method and a device.

### BACKGROUND

A terminal-to-terminal (Device to Device, D2D) technology is a technology for direct communication between terminals. In the D2D technology, communication between terminals can be implemented without forwarding by a base station.

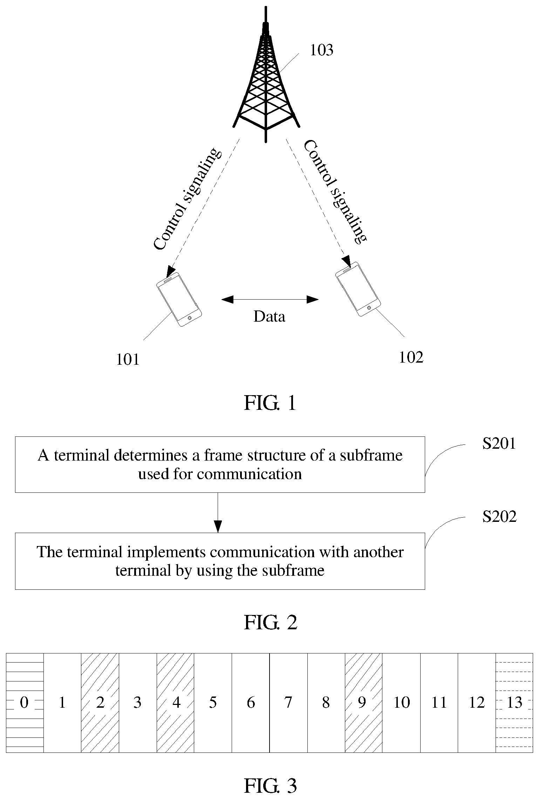

FIG. 1 is a schematic diagram of a D2D communication scenario. Referring to FIG. 1, data sent between a terminal 101 and a terminal 102 may arrive at the peer without forwarding by a base station 103, and a resource occupied for sending the data between the terminal 101 and the terminal 102 may be configured, scheduled, and coordinated by the base station 103. However, in a process of applying the D2D technology, if a spectrum resource occupied by a signal is a high-frequency resource, or a terminal that sends a signal moves quickly, channel characteristics of a radio channel through which the signal is transmitted change quickly. Therefore, a terminal that receives the signal cannot accurately obtain data sent by the terminal that sends the signal, and reliability of data transmission in D2D communication is low.

### SUMMARY

Embodiments of the present invention provide a terminal-to-terminal data transmission method and a device to improve reliability of data transmission in D2D communication when a channel changes quickly.

According to a first aspect, an embodiment of the present invention provides a terminal-to-terminal data transmission method, including:
determining, by a terminal, a frame structure of a subframe used for communication; and
implementing, by the terminal, communication with another terminal by using the subframe; where
a minimum quantity of orthogonal frequency division multiplexing (Orthogonal Frequency Division Multiplexing, OFDM) symbols used for transmitting demodulation reference signals (De-Modulation Reference Signal, DMRS) in the subframe is 3, and the OFDM symbols used for transmitting the DMRSs are distributed at intervals in the subframe.

With reference to the first aspect, in a first possible implementation of the first aspect, that a minimum quantity of OFDM symbols used for transmitting DMRSs in the subframe is 3, and the OFDM symbols used for transmitting the DMRSs are distributed at intervals in the subframe is specifically:
a maximum quantity of OFDM symbols used for transmitting data between two adjacent OFDM symbols used for transmitting DMRSs in the subframe is 4;
before a location of an OFDM symbol used for transmitting a first DMRS in the subframe, a maximum quantity of OFDM symbols is 4, and a minimum quantity of OFDM symbols is 1; and
after a location of an OFDM symbol used for transmitting a last DMRS in the subframe, a maximum quantity of OFDM symbols is 4, and a minimum quantity of OFDM symbols is 1.

With reference to the first aspect or the first possible implementation of the first aspect, in a second possible implementation of the first aspect, a same quantity of OFDM symbols is used for transmitting data between any two adjacent OFDM symbols used for transmitting DMRSs in the subframe.

With reference to the second possible implementation of the first aspect, in a third possible implementation of the first aspect, the subframe includes 14 OFDM symbols, and the quantity of OFDM symbols used for transmitting data between any two adjacent OFDM symbols used for transmitting DMRSs in the subframe is 3 or 4; or
the subframe includes 12 OFDM symbols, and the quantity of OFDM symbols used for transmitting data between any two adjacent OFDM symbols used for transmitting DMRSs in the subframe is 2 or 3.

With reference to the first aspect or the first possible implementation of the first aspect, in a fourth possible implementation of the first aspect, the subframe includes 14 OFDM symbols, and the OFDM symbols used for transmitting the DMRSs in the subframe are a fourth OFDM symbol, a seventh OFDM symbol, and an eleventh OFDM symbol; or the OFDM symbols used for transmitting the DMRSs in the subframe are a fourth OFDM symbol, an eighth OFDM symbol, and an eleventh OFDM symbol.

With reference to any one of the first aspect, or the first to the fourth possible implementations of the first aspect, in a fifth possible implementation of the first aspect, the terminal is a transmit end, and the another terminal is a receive end; and
the implementing, by the terminal, communication with another terminal by using the subframe includes:
obtaining, by the transmit end, the subframe used for carrying data; and
sending, by the transmit end, the data and the DMRSs to the receive end by using the subframe, where the DMRSs are used by the receive end to demodulate the subframe by using the DMRSs in the subframe and obtain the data carried in the subframe.

With reference to any one of the first aspect, or the first to the fourth possible implementations of the first aspect, in a sixth possible implementation of the first aspect, the terminal is a receive end, and the another terminal is a transmit end; and
the implementing, by the terminal, communication with another terminal by using the subframe includes:
receiving, by the receive end, the subframe sent by the transmit end and carrying data; and
demodulating, by the receive end, the subframe by using the DMRSs in the subframe, to obtain the data carried in the subframe.

According to a second aspect, an embodiment of the present invention provides a terminal, including:
a determining module, configured to determine a frame structure of a subframe used for communication; and
a communications module, configured to implement communication with another terminal by using the subframe; where
a minimum quantity of orthogonal frequency division multiplexing OFDM symbols used for transmitting demodulation reference signals DMRSs in the subframe is 3, and the OFDM symbols used for transmitting the DMRSs are distributed at intervals in the subframe.

With reference to the second aspect, in a first possible implementation of the second aspect, that a minimum quantity of OFDM symbols used for transmitting DMRSs in the subframe is 3, and the OFDM symbols used for transmitting the DMRSs are distributed at intervals in the subframe is specifically:
a maximum quantity of OFDM symbols used for transmitting data between two adjacent OFDM symbols used for transmitting DMRSs in the subframe is 4;
before a location of an OFDM symbol used for transmitting a first DMRS in the subframe, a maximum quantity of OFDM symbols is 4, and a minimum quantity of OFDM symbols is 1; and
after a location of an OFDM symbol used for transmitting a last DMRS in the subframe, a maximum quantity of OFDM symbols is 4, and a minimum quantity of OFDM symbols is 1.

With reference to the second aspect or the first possible implementation of the second aspect, in a second possible implementation of the second aspect, a same quantity of OFDM symbols is used for transmitting data between any two adjacent OFDM symbols used for transmitting DMRSs in the subframe.

With reference to the second possible implementation of the second aspect, in a third possible implementation of the second aspect, the subframe includes 14 OFDM symbols, and the quantity of OFDM symbols used for transmitting data between any two adjacent OFDM symbols used for transmitting DMRSs in the subframe is 3 or 4; or
the subframe includes 12 OFDM symbols, and the quantity of OFDM symbols used for transmitting data between any two adjacent OFDM symbols used for transmitting DMRSs in the subframe is 2 or 3.

With reference to the second aspect or the first possible implementation of the second aspect, in a fourth possible implementation of the second aspect, the subframe includes 14 OFDM symbols, and the OFDM symbols used for transmitting the DMRSs in the subframe are a fourth OFDM symbol, a seventh OFDM symbol, and an eleventh OFDM symbol; or the OFDM symbols used for transmitting the DMRSs in the subframe are a fourth OFDM symbol, an eighth OFDM symbol, and an eleventh OFDM symbol.

With reference to any one of the second aspect, or the first to the fourth possible implementations of the second aspect, in a fifth possible implementation of the second aspect, the terminal is a transmit end, and the another terminal is a receive end; and the communications module includes:
a first obtaining unit, configured to obtain the subframe used for carrying data; and
a sending unit, configured to send the data and the DMRSs to the receive end by using the subframe, where the DMRSs are used by the receive end to demodulate the subframe by using the DMRSs in the subframe and obtain the data carried in the subframe.

With reference to any one of the second aspect, or the first to the fourth possible implementations of the second aspect, in a sixth possible implementation of the second aspect, the terminal is a receive end, and the another terminal is a transmit end; and the communications module includes:
a receiving unit, configured to receive the subframe sent by the transmit end and carrying data; and
a second obtaining unit, configured to demodulate the subframe by using the DMRSs in the subframe, to obtain the data carried in the subframe.

According to the terminal-to-terminal data transmission method and device in the embodiments of the present invention, a terminal obtains a subframe used for sending data; and the terminal sends the data by using the subframe, where a minimum quantity of orthogonal frequency division multiplexing OFDM symbols used for transmitting demodulation reference signals DMRSs in the subframe is 3, and the OFDM symbols are distributed at intervals in the subframe. This increases density of the OFDM symbols used for transmitting the DMRSs in the subframe. Therefore, when a channel changes quickly, a receive end can demodulate the data in the subframe accurately according to the at least three DMRSs to accurately obtain the data sent by a transmit end, and further improve reliability of data transmission in D2D communication.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a D2D communication scenario;
FIG. 2 is a flowchart of a terminal-to-terminal data transmission method according to an embodiment of the present invention;
FIG. 3 is a schematic structural diagram 1 of a subframe with a normal CP according to an embodiment of the present invention;
FIG. 4a is a schematic structural diagram 2 of a subframe with a normal CP according to an embodiment of the present invention;
FIG. 4b is a schematic structural diagram 3 of a subframe with a normal CP according to an embodiment of the present invention;
FIG. 5 is a schematic structural diagram 1 of a subframe with an extended CP according to an embodiment of the present invention;
FIG. 6a is a schematic structural diagram 4 of a subframe with a normal CP according to an embodiment of the present invention;
FIG. 6b is a schematic structural diagram 5 of a subframe with a normal CP according to an embodiment of the present invention;
FIG. 6c is a schematic structural diagram 6 of a subframe with a normal CP according to an embodiment of the present invention;
FIG. 6d is a schematic structural diagram 7 of a subframe with a normal CP according to an embodiment of the present invention;
FIG. 7a is a schematic structural diagram 8 of a subframe with a normal CP according to an embodiment of the present invention;
FIG. 7b is a schematic structural diagram 9 of a subframe with a normal CP according to an embodiment of the present invention;
FIG. 8a is a schematic structural diagram 2 of a subframe with an extended CP according to an embodiment of the present invention;
FIG. 8b is a schematic structural diagram 3 of a subframe with an extended CP according to an embodiment of the present invention;
FIG. 9a is a schematic structural diagram 4 of a subframe with an extended CP according to an embodiment of the present invention;
FIG. 9b is a schematic structural diagram 5 of a subframe with an extended CP according to an embodiment of the present invention;
FIG. 10 is a schematic structural diagram 1 of a terminal according to an embodiment of the present invention;
FIG. 11 is a schematic structural diagram 2 of a terminal according to an embodiment of the present invention;
FIG. 12 is a schematic structural diagram 3 of a terminal according to an embodiment of the present invention; and
FIG. 13 is a schematic structural diagram 4 of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

FIG. 2 is a flowchart of a terminal-to-terminal data transmission method according to an embodiment of the present invention. Referring to FIG. 2, the terminal-to-terminal data transmission method in this embodiment includes the following steps.

S201. A terminal determines a frame structure of a subframe used for communication.

S202. The terminal communicates with another terminal by using the subframe.

A minimum quantity of OFDM symbols used for transmitting DMRSs in the subframe is 3, and the OFDM symbols used for transmitting the DMRSs are distributed at intervals in the subframe.

In this embodiment, the terminal may be a transmit end or may be a receive end. Before the terminal communicates with the another terminal, the terminal and the another terminal have determined the structure of the subframe used for communication, and the terminal communicates with the another terminal by using the subframe. Optionally, the terminal may determine, according to a protocol or a preset communications standard, the frame structure of the subframe used for communication. Certainly, the terminal may further determine, in another manner, the frame structure of the subframe used for communication. This is not limited in the present invention.

The following describes in detail a specific process of S202 when the terminal is a transmit end or a receive end.

When the terminal is a transmit end, and the another terminal is a receive end, the transmit end obtains the subframe used for carrying data; and the transmit end sends the data and the DMRSs to the receive end by using the subframe, so that the receive end demodulates the subframe by using the DMRSs in the subframe and obtains the data carried in the subframe.

Before sending the data to the receive end, the transmit end needs to obtain a resource used for sending the data. Optionally, the transmit end may obtain, in the following possible implementations, the resource used for sending the data.

In a possible implementation, the transmit end sends, to a base station, status information used for requesting the resource, and the base station allocates, to the transmit end according to the status information of the transmit end, the resource used for sending the data.

In another possible implementation, a base station broadcasts a resource pool available to the transmit end, and the transmit end obtains, by contending, the resource used for sending the data.

When the terminal is a receive end, and the another terminal is a transmit end, the receive end receives the subframe sent by the transmit end and used for carrying data; and the receive end demodulates the subframe by using the DMRSs in the subframe, and obtains the data carried in the subframe.

In the foregoing embodiment, in the subframe used for communication, the minimum quantity of OFDM symbols used for transmitting the DMRSs in the subframe is 3, and the OFDM symbols are distributed at intervals in the subframe. For example, in 14 OFDM symbols in a subframe with an extended CP, a quantity of OFDM symbols used for transmitting DMRSs is 3 or 4 or 5 or 6 or the like, and OFDM symbols used for transmitting data are located between the OFDM symbols used for transmitting the DMRSs. This increases density of the OFDM symbols used for transmitting the DMRSs, and reduces a distance between an OFDM symbol used for transmitting a DMRS and an OFDM symbol used for transmitting data. When a channel changes quickly, because channel characteristics of close OFDM symbols in a transmission subframe are similar, the receive end can accurately obtain, in a process of demodulating the subframe, data sent by the transmit end.

According to the terminal-to-terminal data transmission method provided by this embodiment of the present invention, a terminal determines a frame structure of a subframe used for communication, and communicates with another terminal by using the subframe, where a minimum quantity of OFDM symbols used for transmitting DMRSs in the subframe is 3, and the OFDM symbols used for transmitting the DMRSs are distributed at intervals in the subframe. This increases density of the OFDM symbols used for transmitting the DMRSs in the subframe. Therefore, when a channel changes quickly, a receive end can demodulate data in the subframe accurately according to the at least three DMRSs to accurately obtain the data sent by a transmit end, and further improve reliability of data transmission in D2D communication.

In a preferred embodiment, the quantity of OFDM symbols used for transmitting the DMRSs in the subframe is 3, and the OFDM symbols used for transmitting the DMRSs are distributed at intervals in the subframe. In comparison with a case in which two OFDM symbols are used for transmitting DMRSs, pilot density in a time domain is increased in an embodiment in which three symbols are used for transmitting DMRSs in each subframe, so that an OFDM symbol used for transmitting data is closer to a nearby pilot, and as time elapses, there are fewer channel changes on pilot symbols and data symbols. Therefore, channel estimation is more accurate. If four or more OFDM symbols are used for transmitting DMRSs, although channel estimation accuracy can be further improved, OFDM symbols used for transmitting data are reduced correspondingly, and as a result, transmission efficiency of a system is reduced.

In the embodiment shown in FIG. 2, further, locations of the OFDM symbols used for transmitting the DMRSs in the subframe need to satisfy all the following conditions: a maximum quantity of OFDM symbols used for transmitting data between two adjacent OFDM symbols used for transmitting DMRSs in the subframe is 4; before a location of an OFDM symbol used for transmitting a first DMRS in the subframe, a maximum quantity of OFDM symbols is 4, and a minimum quantity of OFDM symbols is 1; and after a location of an OFDM symbol used for transmitting a last DMRS in the subframe, a maximum quantity of OFDM symbols is 4, and a minimum quantity of OFDM symbols is 1.

For example, FIG. 3 is a schematic structural diagram 1 of a subframe with a normal CP according to an embodiment of the present invention. Referring to FIG. 3, a quantity of OFDM symbols used for transmitting DMRSs in the subframe is 3; a first OFDM symbol (0 shown in FIG. 3) is used for automatic gain adjustment, second, fourth, sixth, seventh, eighth, ninth, eleventh, twelfth, and thirteenth OFDM symbols are used for transmitting data; third, fifth, and tenth symbols are used for transmitting DMRSs; and a fourteenth OFDM symbol (13 shown in FIG. 3) is used as a guard interval.

In the subframe, a quantity of OFDM symbols used for transmitting data between the third OFDM symbol and the fifth OFDM is 1, and a quantity of OFDM symbols used for transmitting data between the fourth OFDM symbol and the tenth OFDM is 4; before a location of the third OFDM symbol (an OFDM symbol for transmitting a first DMRS), a quantity of OFDM symbols is 2; after a location of the tenth OFDM symbol (an OFDM symbol for transmitting a last DMRS), a quantity of OFDM symbols is 4.

A person skilled in the present invention may understand that, in the subframe with a normal CP as shown in FIG. 3, the third, sixth, and tenth OFDM symbols may be further used for transmitting DMRSs, so long as a minimum quantity of OFDM symbols used for transmitting DMRSs in the subframe is 3 and locations of the OFDM symbols need to satisfy all the foregoing conditions.

On condition that reliability of data transmission in D2D communication is ensured, to increase a ratio of OFDM symbols used for transmitting data in the subframe, preferably, the subframe includes three OFDM symbols used for transmitting DMRSs. Further, in order that the OFDM symbols used for transmitting the DMRSs in the subframe are distributed more evenly in the subframe, the following describes in detail the locations of the OFDM symbols used for transmitting the DMRSs in the subframe. Specifically, the locations of the OFDM symbols used for transmitting the DMRSs in the subframe may include the following cases:

In a possible case, in a subframe with a normal CP, OFDM symbols used for transmitting DMRSs include at least a fourth OFDM symbol and an eleventh OFDM symbol; in a subframe with an extended CP, OFDM symbols used for transmitting DMRSs include at least a third OFDM symbol and a ninth OFDM symbol. The following separately describes in detail locations of OFDM symbols used for transmitting DMRSs in a subframe with a normal CP and a subframe with an extended CP in this case.

For a subframe with a normal CP:

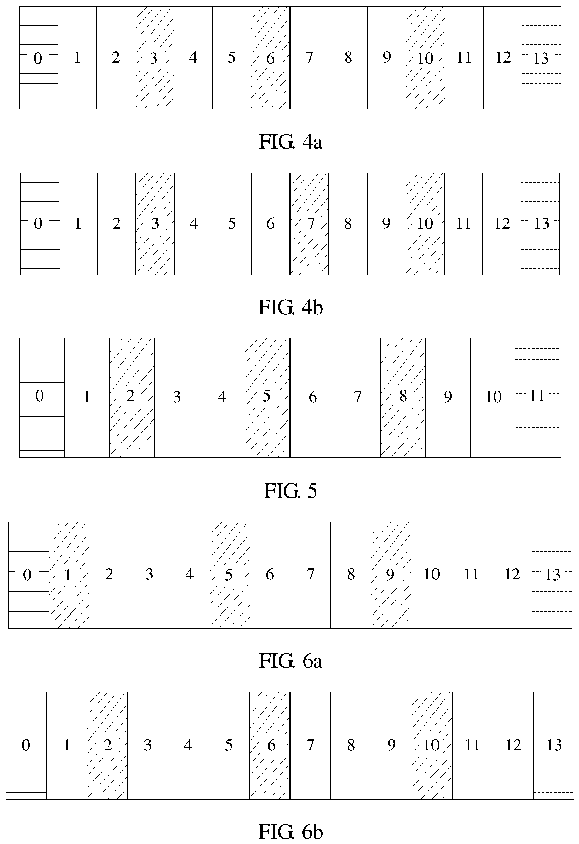

FIG. 4a and FIG. 4b are schematic structural diagrams of a subframe with a normal CP according to an embodiment of the present invention. Referring to FIG. 4a and FIG. 4b, OFDM symbols used for transmitting DMRSs in the subframe with a normal CP include at least a fourth OFDM symbol and an eleventh OFDM symbol.

FIG. 4a is a schematic structural diagram 2 of a subframe with a normal CP according to an embodiment of the present invention. Referring to FIG. 4a, OFDM symbols used for transmitting DMRSs in the subframe with a normal CP are a fourth OFDM symbol, a seventh OFDM symbol, and an eleventh OFDM symbol.

FIG. 4b is a schematic structural diagram 3 of a subframe with a normal CP according to an embodiment of the present invention. Referring to FIG. 4b, OFDM symbols used for transmitting DMRSs in the subframe with a normal CP are a fourth OFDM symbol, an eighth OFDM symbol, and an eleventh OFDM symbol.

A person skilled in the art may understand that, on a basis that the OFDM symbols used for transmitting DMRSs in the subframes shown in FIG. 4a and FIG. 4b include the fourth OFDM symbol and the eleventh OFDM symbol, a sixth or a ninth OFDM symbol in the subframes may be further used for transmitting a DMRS.

For a subframe with an extended CP:
FIG. 5 is a schematic structural diagram 1 of a subframe with an extended CP according to an embodiment of the present invention. Referring to FIG. 5, in the subframe with an extended CP, OFDM symbols used for transmitting DMRSs include at least a third OFDM symbol and a ninth OFDM symbol; in the subframe with an extended CP, OFDM symbols used for transmitting DMRSs are a third OFDM symbol, a sixth OFDM symbol, and a ninth OFDM symbol.

A person skilled in the art may understand that, on a basis that the OFDM symbols used for transmitting DMRSs in the subframe shown in FIG. 5 include the third OFDM symbol and the ninth OFDM symbol, a fifth or a seventh OFDM symbol in the subframe may be further used for transmitting a DMRS.

In this case, after the existing poor-performance subframe with a normal CP or subframe with an extended CP is slightly modified, a good-performance subframe with a normal CP or subframe with an extended CP in this embodiment of the present invention may be obtained, and efficiency of the subframe with a normal CP or the subframe with an extended CP in this embodiment of the present invention is further improved.

In another possible case, a same quantity of OFDM symbols is used for transmitting data between any two adjacent OFDM symbols used for transmitting DMRSs in a subframe. The following separately describes in detail locations of OFDM symbols used for transmitting DMRSs in a subframe with a normal CP and a subframe with an extended CP in this case.

For a subframe with a normal CP:
A quantity of OFDM symbols used for transmitting data between any two adjacent OFDM symbols used for transmitting DMRSs in a subframe with a normal CP is 3 or 4.

FIG. 6a to FIG. 6d are schematic structural diagrams of a subframe with a normal CP according to an embodiment of the present invention. Referring to FIG. 6a to FIG. 6d, in the subframe with a normal CP, a quantity of OFDM symbols used for transmitting data between any two adjacent OFDM symbols used for transmitting DMRSs is 3.

FIG. 6a is a schematic structural diagram 4 of a subframe with a normal CP according to an embodiment of the present invention. Referring to FIG. 6a, OFDM symbols used for transmitting DMRSs in the subframe with a normal CP are a second OFDM symbol, a sixth OFDM symbol, and a tenth OFDM symbol.

FIG. 6b is a schematic structural diagram 5 of a subframe with a normal CP according to an embodiment of the present invention. Referring to FIG. 6b, OFDM symbols used for transmitting DMRSs in the subframe with a normal CP are a third OFDM symbol, a seventh OFDM symbol, and an eleventh OFDM symbol.

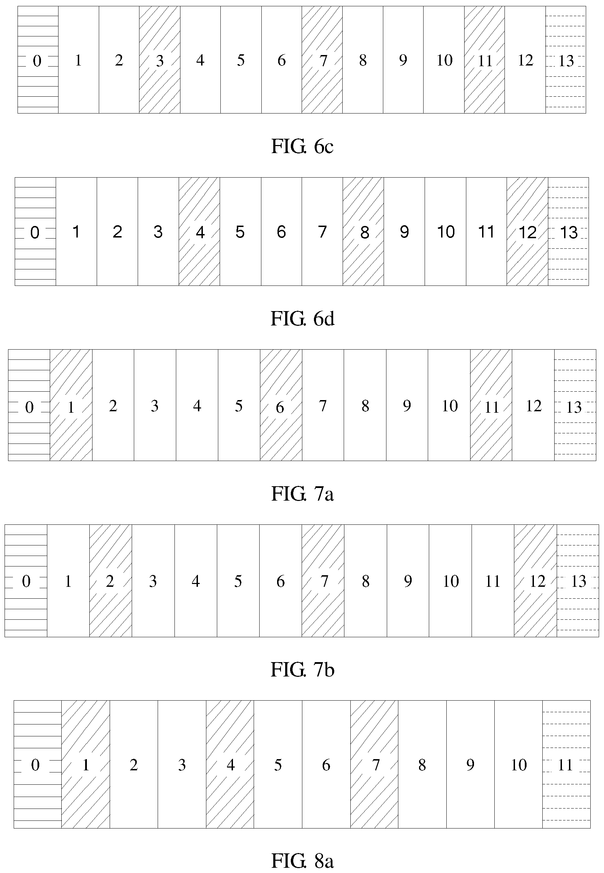

FIG. 6c is a schematic structural diagram 6 of a subframe with a normal CP according to an embodiment of the present invention. Referring to FIG. 6c, OFDM symbols used for transmitting DMRSs in the subframe with a normal CP are a fourth OFDM symbol, an eighth OFDM symbol, and a twelfth OFDM symbol.

FIG. 6d is a schematic structural diagram 7 of a subframe with a normal CP according to an embodiment of the present invention. Referring to FIG. 6d, OFDM symbols used for transmitting DMRSs in the subframe with a normal CP are a fifth OFDM symbol, a ninth OFDM symbol, and a thirteenth OFDM symbol.

FIG. 7a and FIG. 7b are schematic structural diagrams of a subframe with a normal CP according to an embodiment of the present invention. Referring to FIG. 7a and FIG. 7b, in the subframe with a normal CP, a quantity of OFDM symbols used for transmitting data between any two adjacent OFDM symbols used for transmitting DMRSs is 4.

FIG. 7a is a schematic structural diagram 8 of a subframe with a normal CP according to an embodiment of the present invention. Referring to FIG. 7a, OFDM symbols used for transmitting DMRSs in the subframe with a normal CP are a second OFDM symbol, a seventh OFDM symbol, and a twelfth OFDM symbol.

FIG. 7b is a schematic structural diagram 9 of a subframe with a normal CP according to an embodiment of the present invention. Referring to FIG. 7b, OFDM symbols used for transmitting DMRSs in the subframe with a normal CP are a third OFDM symbol, an eighth OFDM symbol, and a thirteenth OFDM symbol.

For a subframe with an extended CP:
A quantity of OFDM symbols used for transmitting data between any two adjacent OFDM symbols used for transmitting DMRSs in a subframe with an extended CP is 2 or 3.

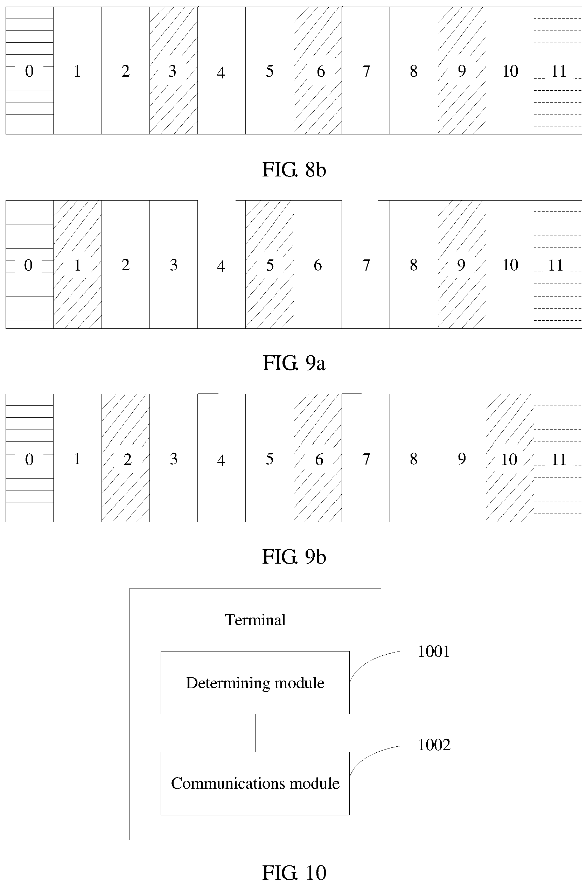

FIG. 8a and FIG. 8b are schematic structural diagrams of a subframe with an extended CP according to an embodiment of the present invention. Referring to FIG. 8a and FIG. 8b, in the subframe with an extended CP, a quantity of OFDM symbols used for transmitting data between any two adjacent OFDM symbols used for transmitting DMRSs is 2.

FIG. 8a is a schematic structural diagram 2 of a subframe with an extended CP according to an embodiment of the present invention. Referring to FIG. 8a, OFDM symbols used for transmitting DMRSs in the subframe with an extended CP are a second OFDM symbol, a fifth OFDM symbol, and an eighth OFDM symbol.

FIG. 8b is a schematic structural diagram 3 of a subframe with an extended CP according to an embodiment of the present invention. Referring to FIG. 8b, OFDM symbols used for transmitting DMRSs in the subframe with an extended CP are a fourth OFDM symbol, a seventh OFDM symbol, and a tenth OFDM symbol.

It should be noted that, in the subframe shown in FIG. 5, a same quantity of OFDM symbols is used for transmitting data between any two adjacent OFDM symbols used for transmitting DMRSs and the quantity is also 2. Details are not described again herein.

FIG. 9a and FIG. 9b are schematic structural diagrams of a subframe with an extended CP according to an embodiment of the present invention. Referring to FIG. 9a and FIG. 9b, in the subframe with an extended CP, a quantity of OFDM symbols used for transmitting data between any two adjacent OFDM symbols used for transmitting DMRSs is 3.

FIG. 9a is a schematic structural diagram 4 of a subframe with an extended CP according to an embodiment of the present invention. Referring to FIG. 9a, OFDM symbols used for transmitting DMRSs in the subframe with an extended CP are a second OFDM symbol, a sixth OFDM symbol, and a tenth OFDM symbol.

FIG. 9b is a schematic structural diagram 5 of a subframe with an extended CP according to an embodiment of the present invention. Referring to FIG. 9b, OFDM symbols used for transmitting DMRSs in the subframe with an extended CP are a third OFDM symbol, an eighth OFDM symbol, and an eleventh OFDM symbol.

In this case, a same quantity of OFDM symbols is used for transmitting data between any two adjacent OFDM symbols used for transmitting DMRSs in the subframe, so that any two adjacent OFDM symbols used for transmitting DMRSs are distributed evenly in the subframe. A receive end can demodulate data in the subframe more accurately according to the three DMRSs that are distributed evenly.

FIG. 10 is a schematic structural diagram 1 of a terminal according to an embodiment of the present invention. Referring to FIG. 10, the terminal may include:
a determining module 1001, configured to determine a frame structure of a subframe used for communication; and
a communications module 1002, configured to implement communication with another terminal by using the subframe; where
a minimum quantity of orthogonal frequency division multiplexing OFDM symbols used for transmitting demodulation reference signals DMRSs in the subframe is 3, and the OFDM symbols used for transmitting the DMRSs are distributed at intervals in the subframe.

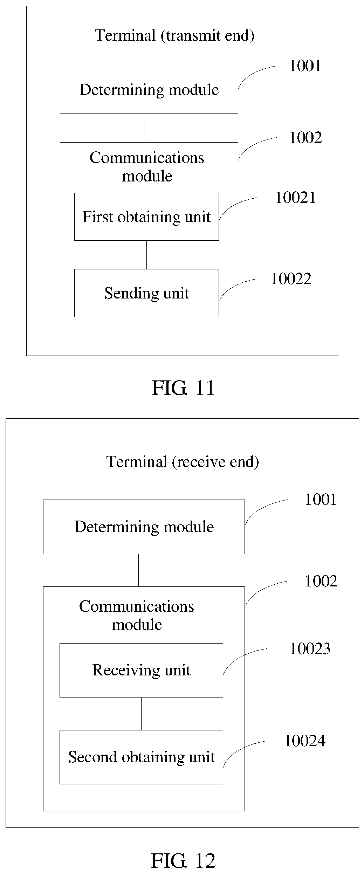

FIG. 11 is a schematic structural diagram 2 of a terminal according to an embodiment of the present invention. On a basis of the embodiment shown in FIG. 10, referring to FIG. 11, when the terminal is a transmit end, and the another terminal is a receive end, the communications module 1002 includes:
a first obtaining unit 10021, configured to obtain the subframe used for carrying data; and
a sending unit 10022, configured to send the data and the DMRSs to the receive end by using the subframe, so that the receive end demodulates the subframe by using the DMRSs in the subframe and obtains the data carried in the subframe.

FIG. 12 is a schematic structural diagram 3 of a terminal according to an embodiment of the present invention. On a basis of the embodiment shown in FIG. 10, referring to FIG. 12, when the terminal is a receive end, and the another terminal is a transmit end, the communications module 1002 includes:
a receiving unit 10023, configured to receive the subframe sent by the transmit end and carrying data; and
a second obtaining unit 10024, configured to demodulate the subframe by using the DMRSs in the subframe, to obtain the data carried in the subframe.

In the foregoing embodiment, that a minimum quantity of OFDM symbols used for transmitting DMRSs in the subframe is 3, and the OFDM symbols used for transmitting the DMRSs are distributed at intervals in the subframe is specifically:
a maximum quantity of OFDM symbols used for transmitting data between two adjacent OFDM symbols used for transmitting DMRSs in the subframe is 4;
before a location of an OFDM symbol used for transmitting a first DMRS in the subframe, a maximum quantity of OFDM symbols is 4, and a minimum quantity of OFDM symbols is 1; and
after a location of an OFDM symbol used for transmitting a last DMRS in the subframe, a maximum quantity of OFDM symbols is 4, and a minimum quantity of OFDM symbols is 1.

Locations of the OFDM symbols used for transmitting the DMRSs in the subframe may include the following cases:

In a feasible case, a same quantity of OFDM symbols is used for transmitting data between any two adjacent OFDM symbols used for transmitting DMRSs in the subframe.

Specifically, the subframe includes 14 OFDM symbols, and the quantity of OFDM symbols used for transmitting data between any two adjacent OFDM symbols used for transmitting DMRSs in the subframe is 3 or 4; or
the subframe includes 12 OFDM symbols, and the quantity of OFDM symbols used for transmitting data between any two adjacent OFDM symbols used for transmitting DMRSs in the subframe is 2 or 3.

In another feasible case, the subframe includes 14 OFDM symbols, and the OFDM symbols used for transmitting the DMRSs in the subframe are a fourth OFDM symbol, a seventh OFDM symbol, and an eleventh OFDM symbol; or the OFDM symbols used for transmitting the DMRSs in the subframe are a fourth OFDM symbol, an eighth OFDM symbol, and an eleventh OFDM symbol.

The terminal in this embodiment may be configured to perform the technical solution of the foregoing method embodiment. Implementation principles and technical effects thereof are similar, and are not described again herein.

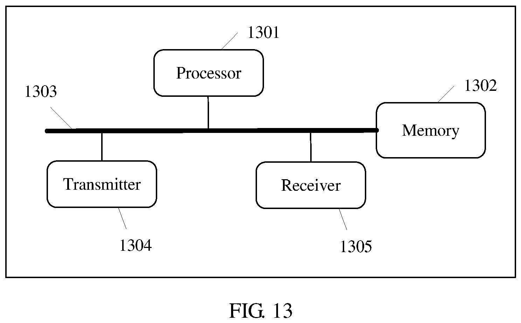

FIG. 13 is a schematic structural diagram 4 of a terminal according to an embodiment of the present invention. Referring to FIG. 13, the terminal may include a processor 1301, for example, a CPU, a memory 1302, at least one communications bus 1303, a transmitter 1304, and a receiver 1305. The communications bus 1303 is configured to implement connection and communication between components. The memory 1302 may include a high-speed RAM memory, or may include a non-volatile memory NVM, for example, at least one disk storage. The memory 1302 may store various programs. The processor 1301 may invoke various programs in the memory 1302 to complete various processing functions and implement steps of the method in this embodiment.

The processor 1301 is configured to determine a frame structure of a subframe used for communication.

The transmitter 1304 and the receiver 1305 are configured to implement communication with another terminal by using the subframe.

A minimum quantity of orthogonal frequency division multiplexing OFDM symbols used for transmitting demodulation reference signals DMRSs in the subframe is 3, and the OFDM symbols used for transmitting the DMRSs are distributed at intervals in the subframe.

When the terminal is a transmit end, and the another terminal is a receive end,
the processor 1301 is specifically configured to obtain the subframe used for carrying data; and
the transmitter 1304 is specifically configured to send the data and the DMRSs to the receive end by using the subframe, so that the receive end demodulates the subframe by using the DMRSs in the subframe and obtains the data carried in the subframe.

When the terminal is a receive end, and the another terminal is a transmit end,
the receiver 1305 is specifically configured to receive the subframe sent by the transmit end and carrying data; and
the processor 1301 is specifically configured to demodulate the subframe by using the DMRSs in the subframe, to obtain the data carried in the subframe.

In the foregoing embodiment, that a minimum quantity of OFDM symbols used for transmitting DMRSs in the subframe is 3, and the OFDM symbols used for transmitting the DMRSs are distributed at intervals in the subframe is specifically:
a maximum quantity of OFDM symbols used for transmitting data between two adjacent OFDM symbols used for transmitting DMRSs in the subframe is 4;
before a location of an OFDM symbol used for transmitting a first DMRS in the subframe, a maximum quantity of OFDM symbols is 4, and a minimum quantity of OFDM symbols is 1; and
after a location of an OFDM symbol used for transmitting a last DMRS in the subframe, a maximum quantity of OFDM symbols is 4, and a minimum quantity of OFDM symbols is 1.

Locations of the OFDM symbols used for transmitting the DMRSs in the subframe may include the following cases:

In a feasible case, a same quantity of OFDM symbols is used for transmitting data between any two adjacent OFDM symbols used for transmitting DMRSs in the subframe.

Specifically, the subframe includes 14 OFDM symbols, and the quantity of OFDM symbols used for transmitting data between any two adjacent OFDM symbols used for transmitting DMRSs in the subframe is 3 or 4; or
the subframe includes 12 OFDM symbols, and the quantity of OFDM symbols used for transmitting data between any two adjacent OFDM symbols used for transmitting DMRSs in the subframe is 2 or 3.

In another feasible case, the subframe includes 14 OFDM symbols, and the OFDM symbols used for transmitting the DMRSs in the subframe are a fourth OFDM symbol, a seventh OFDM symbol, and an eleventh OFDM symbol; or the OFDM symbols used for transmitting the DMRSs in the subframe are a fourth OFDM symbol, an eighth OFDM symbol, and an eleventh OFDM symbol.

The terminal in this embodiment may be used to perform the technical solution of the foregoing method embodiment. The implementation principles and technical effects are similar, and are not further described herein.

Further embodiments of the present invention are provided in the following. It should be noted that the numbering used in the following section does not necessarily need to comply with the numbering used in the previous sections.
Embodiment 1. A terminal-to-terminal data transmission method, comprising:
   determining, by a terminal, a frame structure of a subframe used for communication; and
   implementing, by the terminal, communication with another terminal by using the subframe; wherein
   a minimum quantity of orthogonal frequency division multiplexing OFDM symbols used for transmitting demodulation reference signals DMRSs in the subframe is 3, and the OFDM symbols used for transmitting the DMRSs are distributed at intervals in the subframe.
Embodiment 2. The method according to embodiment 1, wherein that a minimum quantity of OFDM symbols used for transmitting DMRSs in the subframe is 3, and the OFDM symbols used for transmitting the DMRSs are distributed at intervals in the subframe is specifically:
   a maximum quantity of OFDM symbols used for transmitting data between two adjacent OFDM symbols used for transmitting DMRSs in the subframe is 4;
   before a location of an OFDM symbol used for transmitting a first DMRS in the subframe, a maximum quantity of OFDM symbols is 4, and a minimum quantity of OFDM symbols is 1; and
   after a location of an OFDM symbol used for transmitting a last DMRS in the subframe, a maximum quantity of OFDM symbols is 4, and a minimum quantity of OFDM symbols is 1.
Embodiment 3. The method according to embodiment 1 or 2, wherein a same quantity of OFDM symbols is used for transmitting data between any two adjacent OFDM symbols used for transmitting DMRSs in the subframe.
Embodiment 4. The method according to embodiment 3, wherein the subframe comprises 14 OFDM symbols, and the quantity of OFDM symbols used for transmitting data between any two adjacent OFDM symbols used for transmitting DMRSs in the subframe is 3 or 4; or
   the subframe comprises 12 OFDM symbols, and the quantity of OFDM symbols used for transmitting data between any two adjacent OFDM symbols used for transmitting DMRSs in the subframe is 2 or 3.
Embodiment 5. The method according to embodiment 1 or 2, wherein the subframe comprises 14 OFDM symbols, and the OFDM symbols used for transmitting the DMRSs in the subframe are a fourth OFDM symbol, a seventh OFDM symbol, and an eleventh OFDM symbol; or the OFDM symbols used for transmitting the DMRSs in the subframe are a fourth OFDM symbol, an eighth OFDM symbol, and an eleventh OFDM symbol.
Embodiment 6. The method according to any one of embodiments 1 to 5, wherein the terminal is a transmit end, and the another terminal is a receive end; and
   the implementing, by the terminal, communication with another terminal by using the subframe comprises:
   obtaining, by the transmit end, the subframe used for carrying data; and
   sending, by the transmit end, the data and the DMRSs to the receive end by using the subframe, wherein the DMRSs are used by the receive end to demodulate the subframe by using the DMRSs in the subframe and obtain the data carried in the subframe.
Embodiment 7. The method according to any one of embodiments 1 to 5, wherein the terminal is a receive end, and the another terminal is a transmit end; and
   the implementing, by the terminal, communication with another terminal by using the subframe comprises:
   receiving, by the receive end, the subframe sent by the transmit end and carrying data; and
   demodulating, by the receive end, the subframe by using the DMRSs in the subframe, to obtain the data carried in the subframe.
Embodiment 8. A terminal, comprising:
   a determining module, configured to determine a frame structure of a subframe used for communication; and
   a communications module, configured to implement communication with another terminal by using the subframe; wherein
   a minimum quantity of orthogonal frequency division multiplexing OFDM symbols used for transmitting demodulation reference signals DMRSs in the subframe is 3, and the OFDM symbols used for transmitting the DMRSs are distributed at intervals in the subframe.
Embodiment 9. The terminal according to embodiment 8, wherein that a minimum quantity of OFDM symbols used for transmitting DMRSs in the subframe is 3, and the OFDM symbols used for transmitting the DMRSs are distributed at intervals in the subframe is specifically:
   a maximum quantity of OFDM symbols used for transmitting data between two adjacent OFDM symbols used for transmitting DMRSs in the subframe is 4;
   before a location of an OFDM symbol used for transmitting a first DMRS in the subframe, a maximum quantity of OFDM symbols is 4, and a minimum quantity of OFDM symbols is 1; and
   after a location of an OFDM symbol used for transmitting a last DMRS in the subframe, a maximum quantity of OFDM symbols is 4, and a minimum quantity of OFDM symbols is 1.
Embodiment 10. The terminal according to embodiment 8 or 9, wherein a same quantity of OFDM symbols is used for transmitting data between any two adjacent OFDM symbols used for transmitting DMRSs in the subframe.
Embodiment 11. The terminal according to embodiment 10, wherein the subframe comprises 14 OFDM symbols, and the quantity of OFDM symbols used for transmitting data between any two adjacent OFDM symbols used for transmitting DMRSs in the subframe is 3 or 4; or
   the subframe comprises 12 OFDM symbols, and the quantity of OFDM symbols used for transmitting data between any two adjacent OFDM symbols used for transmitting DMRSs in the subframe is 2 or 3.
Embodiment 12. The terminal according to embodiment 8 or 9, wherein the subframe comprises 14 OFDM symbols, and the OFDM symbols used for transmitting the DMRSs in the subframe are a fourth OFDM symbol, a seventh OFDM symbol, and an eleventh OFDM symbol; or the OFDM symbols used for transmitting the DMRSs in the subframe are a fourth OFDM symbol, an eighth OFDM symbol, and an eleventh OFDM symbol.
Embodiment 13. The terminal according to any one of embodiments 8 to 12, wherein the terminal is a transmit end, and the another terminal is a receive end; and the communications module comprises:
   a first obtaining unit, configured to obtain the subframe used for carrying data; and
   a sending unit, configured to send the data and the DMRSs to the receive end by using the subframe, wherein the DMRSs are used by the receive end to demodulate the subframe by using the DMRSs in the subframe and obtain the data carried in the subframe.
Embodiment 14. The terminal according to any one of embodiments 8 to 12, wherein the terminal is a receive end, and the another terminal is a transmit end; and the communications module comprises:
   a receiving unit, configured to receive the subframe sent by the transmit end and carrying data; and
   a second obtaining unit, configured to demodulate the subframe by using the DMRSs in the subframe, to obtain the data carried in the subframe.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A device to device data transmission method, comprising:
determining, by a terminal, a subframe structure of a subframe used for communication; and
implementing, by the terminal, communication with another terminal by using the subframe; wherein
a minimum quantity of orthogonal frequency division multiplexing, OFDM, symbols used for transmitting demodulation reference signals DMRSs in the subframe is 3, and the OFDM symbols used for transmitting the DMRSs are distributed at intervals in the subframe.

2. The method according to claim 1, wherein that a minimum quantity of OFDM symbols used for transmitting DMRSs in the subframe is 3, and the OFDM symbols used for transmitting the DMRSs are distributed at intervals in the subframe is specifically:
a maximum quantity of OFDM symbols used for transmitting data between two adjacent OFDM symbols used for transmitting DMRSs in the subframe is 4;
before a location of an OFDM symbol used for transmitting a first DMRS in the subframe, a maximum quantity of OFDM symbols is 4, and a minimum quantity of OFDM symbols is 1; and
after a location of an OFDM symbol used for transmitting a last DMRS in the subframe, a maximum quantity of OFDM symbols is 4, and a minimum quantity of OFDM symbols is 1.

3. The method according to claim 1 or 2, wherein a same quantity of OFDM symbols is used for transmitting data between any two adjacent OFDM symbols used for transmitting DMRSs in the subframe.

4. The method according to claim 3, wherein the subframe comprises 14 OFDM symbols, and the quantity of OFDM symbols used for transmitting data between any two adjacent OFDM symbols used for transmitting DMRSs in the subframe is 3 or 4; or
the subframe comprises 12 OFDM symbols, and the quantity of OFDM symbols used for transmitting data between any two adjacent OFDM symbols used for transmitting DMRSs in the sub frame is 2 or 3.

5. The method according to claim 1 or 2, wherein the subframe comprises 14 OFDM symbols, and the OFDM symbols used for transmitting the DMRSs in the subframe are a fourth OFDM symbol, a seventh OFDM symbol, and an eleventh OFDM symbol; or the OFDM symbols used for transmitting the DMRSs in the subframe are a fourth OFDM symbol, an eighth OFDM symbol, and an eleventh OFDM symbol.

6. The method according to any one of claims 1 to 5, wherein the terminal is a transmit end, and the another terminal is a receive end; and
the implementing, by the terminal, communication with another terminal by using the subframe comprises:
obtaining, by the transmit end, the subframe used for carrying data; and
sending, by the transmit end, the data and the DMRSs to the receive end by using the subframe, wherein the DMRSs are used by the receive end to demodulate the subframe by using the DMRSs in the subframe and obtain the data carried in the subframe.

7. The method according to any one of claims 1 to 5, wherein the terminal is a receive end, and the another terminal is a transmit end; and
the implementing, by the terminal, communication with another terminal by using the subframe comprises:
receiving, by the receive end, the subframe sent by the transmit end and carrying data; and
demodulating, by the receive end, the subframe by using the DMRSs in the subframe, to obtain the data carried in the subframe.

8. A terminal, comprising:
a determining module, configured to determine a subframe structure of a subframe used for communication; and
a communications module, configured to implement communication with another terminal by using the subframe; wherein
a minimum quantity of orthogonal frequency division multiplexing, OFDM, symbols used for transmitting demodulation reference signals DMRSs in the subframe is 3, and the OFDM symbols used for transmitting the DMRSs are distributed at intervals in the subframe.

9. The terminal according to claim 8, wherein that a minimum quantity of OFDM symbols used for transmitting DMRSs in the subframe is 3, and the OFDM symbols used for transmitting the DMRSs are distributed at intervals in the subframe is specifically:
a maximum quantity of OFDM symbols used for transmitting data between two adjacent OFDM symbols used for transmitting DMRSs in the subframe is 4;
before a location of an OFDM symbol used for transmitting a first DMRS in the subframe, a maximum quantity of OFDM symbols is 4, and a minimum quantity of OFDM symbols is 1; and
after a location of an OFDM symbol used for transmitting a last DMRS in the subframe, a maximum quantity of OFDM symbols is 4, and a minimum quantity of OFDM symbols is 1.

10. The terminal according to claim 8 or 9, wherein a same quantity of OFDM symbols is used for transmitting data between any two adjacent OFDM symbols used for transmitting DMRSs in the subframe.

11. The terminal according to claim 10, wherein the subframe comprises 14 OFDM symbols, and the quantity of OFDM symbols used for transmitting data between any two adjacent OFDM symbols used for transmitting DMRSs in the subframe is 3 or 4; or
the subframe comprises 12 OFDM symbols, and the quantity of OFDM symbols used for transmitting data between any two adjacent OFDM symbols used for transmitting DMRSs in the subframe is 2 or 3.

12. The terminal according to claim 8 or 9, wherein the subframe comprises 14 OFDM symbols, and the OFDM symbols used for transmitting the DMRSs in the subframe are a fourth OFDM symbol, a seventh OFDM symbol, and an eleventh OFDM symbol; or the OFDM symbols used for transmitting the DMRSs in the subframe are a fourth OFDM symbol, an eighth OFDM symbol, and an eleventh OFDM symbol.

13. The terminal according to any one of claims 8 to 12, wherein the terminal is a transmit end, and the another terminal is a receive end; and the communications module comprises:
a first obtaining unit, configured to obtain the subframe used for carrying data; and
a sending unit, configured to send the data and the DMRSs to the receive end by using the subframe, wherein the DMRSs are used by the receive end to demodulate the subframe by using the DMRSs in the subframe and obtain the data carried in the subframe.

14. The terminal according to any one of claims 8 to 12, wherein the terminal is a receive end, and the another terminal is a transmit end; and the communications module comprises:
a receiving unit, configured to receive the subframe sent by the transmit end and carrying data; and
a second obtaining unit, configured to demodulate the subframe by using the DMRSs in the subframe, to obtain the data carried in the subframe.

15. A computer-readable storage medium comprising instructions which, when executed by a computer, cause the computer to carry out the steps of the method of any one of claims 1 to 7.
